# EUROPEAN PATENT SPECIFICATION

(11) **EP 2 829 949 B1**
(45) Date of publication and mention of the grant of the patent: **06.11.2019**
(21) Application number: 13178166.8
(22) Date of filing: 26.07.2013
(51) Int. Cl.: G06F 3/01, G06F 3/043

(54) **System and method for manipulating an object in a three-dimensional desktop environment**
System und Verfahren zur Handhabung eines Objekts in einer dreidimensionalen Desktopumgebung
Système et procédé permettant de manipuler un objet dans un environnement de bureau en trois dimensions

(43) Date of publication of application: 28.01.2015
(73) Proprietor: BlackBerry Limited, Waterloo, ON N2K 0A7 (CA)
(72) Inventor: Mankowski, Peter, Waterloo, Ontario N2L 3W8 (CA)
(74) Representative: Noble, Nicholas

(56) References cited:
- US-A1- 2008 252 595
- US-A1- 2009 077 504
- US-A1- 2010 095 206
- US-A1- 2011 195 782
- US-A1- 2011 205 151
- US-A1- 2012 001 875
- US-A1- 2012 293 513

## Description

### BACKGROUND

A computer uses a desktop environment to enable a user to visually interact with an operating system of the computer. Desktop environments allow the user to move items within a two-dimensional surface, which is generally defined by a display on a monitor of the computer. In some cases, the desktop environment may be designed to give an illusion of depth to provide a three-dimensional experience for the user. However, despite this illusion of depth, the interaction typically remains a two-dimensional interaction. By providing a true three-dimensional desktop environment, it is possible for a user to interact with the computer in an entirely new way.

US 2010/0095206 A1 discloses a method for providing a user interface using three-dimensional gestures. In one embodiment, a method for controlling widgets displayed on a display of a mobile terminal using gestures in a space is disclosed. The widgets may comprise 3D images and the gestures may be detected by ultrasonic sensors. In one embodiment, the display may be a three-dimensional display.

US 2012/0293513 A1 discloses gestural interaction with a 3D user interface, displayed by a 3D content display device, such as a 3D television. A user perceives a 3D image projecting from the display screen. In one embodiment, the user may gesture in a way that simulates pressing an icon or a button of the 3D user interface.

The invention is defined by the appended independent claims. The dependent claims define preferred embodiments of the invention.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
Figure 1 shows an illustrative three-dimensional desktop environment of a suitable device having a processor;
Figure 2 shows an illustrative display of the device of Figure 1 having a configuration of transducers that may be used for determining a location of a user object in real space with respect to the display;
Figure 3 illustrates use of the transducer configuration of Figure 2 to determine a location of the user object with respect to the display;
Figure 4 shows a display having an alternative configuration of transducers;
Figure 5 illustrates a method of mapping a user object in a real space to a virtual location within the three-dimensional desktop environment in order to enable an interaction of the user with the three-dimensional desktop environment;
Figure 6 shows an organizational structure of a three-dimensional desktop environment;
Figure 7 shows an expanded view of a power level of the three-dimensional desktop environment;
Figure 8 shows an exemplary entry of a look-up table for a selected pixel volume of the three-dimensional desktop environment; and
Figure 9 illustrates the motion of a virtual object within the three-dimensional desktop environment.

### DETAILED DESCRIPTION

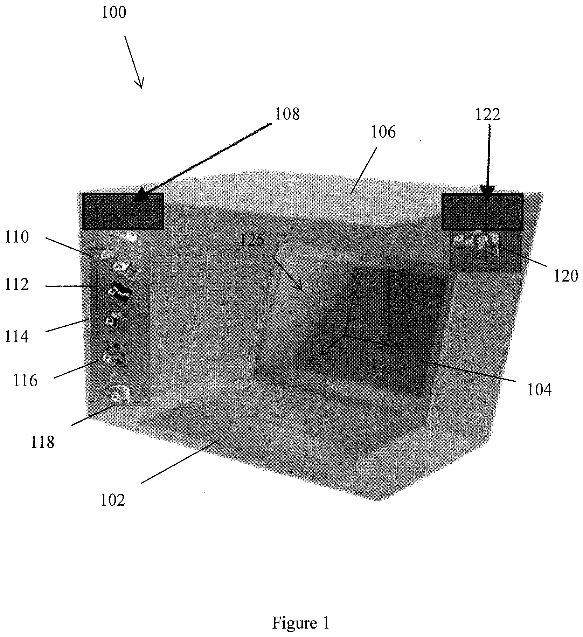

Figure 1 shows an illustrative three-dimensional desktop environment 100 of a device 102, which device 102 may include a phone such as a smartphone having a video display, a tablet, a laptop computer, a desktop computer, or a television or monitor in communication with a processor, in various embodiments. The three-dimensional desktop environment 100 is a three-dimensional space 106 that is defined with respect to the device 102. The device 102 includes a display 104 that is capable of projecting an image so as to appear to be located at a given position within the three-dimensional space 106. In various embodiments, the projected image may be an interactive image such as an icon that, when selected by a user, produces an action at the device 102 or within the desktop environment 100, such as starting an application, performing an action related to an operating system of the device 102 or other suitable action.

For illustrative purposes only, the three-dimensional space 106 is shown as having a cube-like volume corresponding to the device 102. A coordinate system 125 may be defined over the space 106. In general, the coordinate system 125 may be defined with respect to the display 104 which generates the three-dimensional desktop environment 100. One direction such as a z-direction of the coordinate system 125 extends perpendicularly out of display 104, with z=0 defined at a surface of the display 104. The x-direction is generally oriented along a horizontal axis of the display 104 and the y-direction is generally oriented along a vertical axis of the display 104.

Icons displayed within the desktop environment 100 may be either isolated icons or grouped icons. In Figure 1, for example, a first group of icons 110, 112, 114, 116 and 118 are displayed at a location within the three-dimensional space 106 distal to and on a left side of the display 104 as seen by a viewer. Also, single icon 120 is displayed at a location within the three-dimensional space 106 proximate the display 104 and on a right side thereof as seen by the viewer. Tag 108 is associated with the first group of icons 110, 112, 114, 116 and 118 such that a user may be able to perform an action on all of icons 110, 112, 114, 116 and 118 by selecting the tag 108 and performing the action on the tag 108. Tag 120 is similarly associated with icon 122.

Since the three-dimensional desktop environment 100 is projected into a three-dimensional space 106 existing in real space, a user may move a user object such as a hand or a stylus, pointer, wand, etc., within the three-dimensional space 106. In various embodiments, at least one ultrasonic transducer may be used to determine a location of the user object within the three-dimensional space 106. Thus, the user may be enabled to employ the user object to interact with the three-dimensional desktop environment 100 as well as with an image or icon within the three-dimensional desktop environment 100, as discussed below.

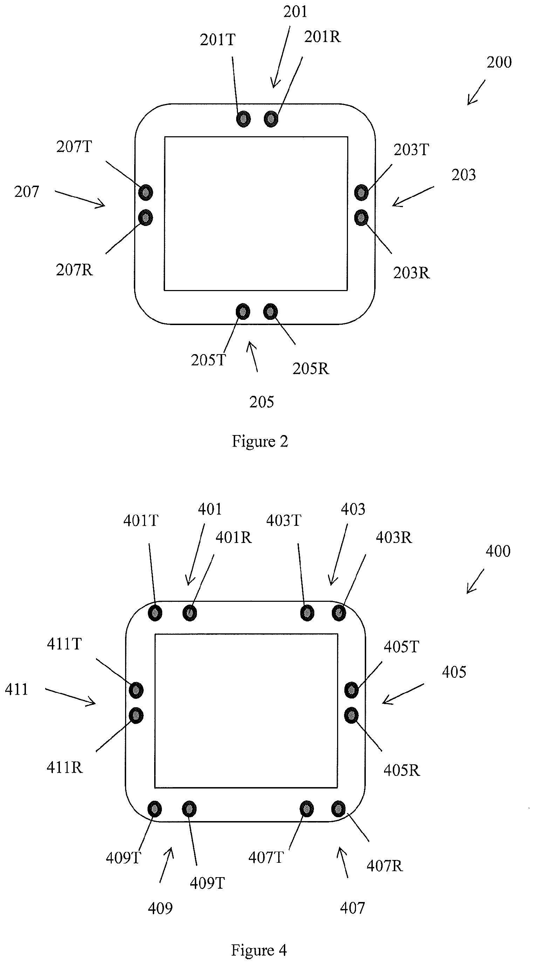

Figure 2 shows an illustrative display 200 having ultrasonic transducers that are configured to transmit and receive signals used for determining a location of a user object in real space with respect to the display. The illustrative display 200 includes four transducers 201, 203, 205 and 207. Transducer 201 includes a transmitter 201T and a receiver 201R. Similarly, transducer 203 includes transmitter 203T and receiver 203R, transducer 205 includes transmitter 205T and receiver 205R, and transducer 207 includes transmitter 207T and receiver 207R.

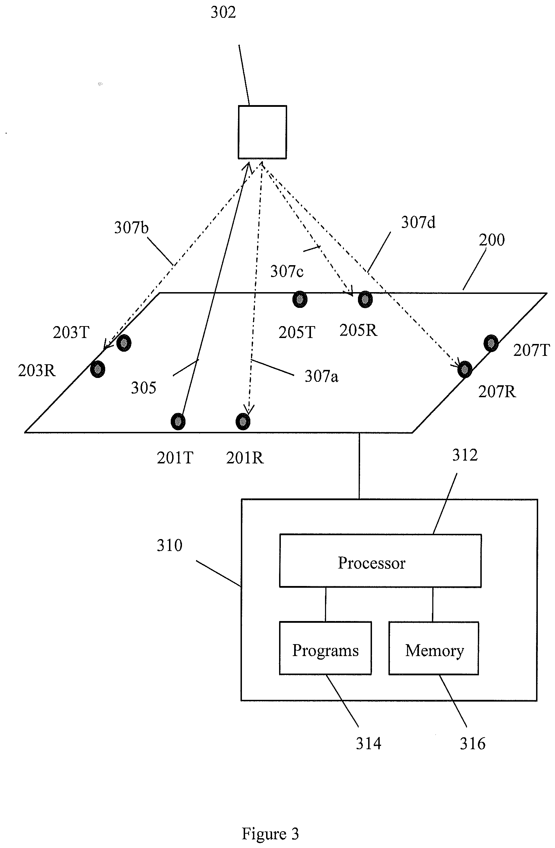

Figure 3 is a schematic showing the transducer configuration of Figure 2 to determine a location of a user object 302 with respect to display 200. Display 200 may be coupled to a control module 310 including a processor 312, programs 314 and memory location 316. Transducer signals may be processed at the processor 312 according to various programs 314 in order to perform various actions of the disclosure, including determining a relative location of the user object 302 with respect to display 200, determining a movement or an action taken at the user object 302 and performing an action within the desktop environment based on the measured movement or action. Various image parameters, transducer signal times, etc., may be stored at the memory location 316. In order to locate the user object 302, transmitter 201T generates an ultrasonic pulse 305 at a selected time, which time is recorded by the control module 310. The generated ultrasonic pulse 305 is propagated into the three-dimensional space in front of the display 200. The user object 302 in the space in front of the display 200 reflects the generated ultrasonic pulse ("reflected ultrasonic pulse"), which propagates back towards the display 200. Receiver 201R receives the reflected ultrasonic pulse 307a and a time at which the reflected ultrasonic pulse 307a is received is recorded. Processor 312 determines a time difference between the time at which the ultrasonic pulse 305 is propagated by the transmitter 201T into the three-dimensional space and the time at which the reflected ultrasonic pulse 307a is received by the receiver 201R, and determines a perpendicular distance along the z-axis between the display 200 and the user object 302 based on the determined time and a known speed of sound.

Additionally, receivers 203R, 205R and 207R of the other transducers 203, 205 and 207 can receive ultrasonic pulses 307b, 307c and 307d, respectively, that are reflected from the user object 302 corresponding to the generated ultrasonic pulse 305 from transmitter 201T. Time delays between generating the ultrasonic pulse 305 and receiving the reflected pulses 307b, 307c and 307d may also be recorded. Due to known spatial distances between transmitter 201T and receivers 203R, 205R and 207R, time delays determined for each of these transmitter-receiver pairings may be used to determine a horizontal and vertical distance (i.e., x-coordinate and y-coordinate) of the user object 302 with respect to the display 200.

In addition to measuring reflected pulses that are based on the ultrasonic pulse generated at transmitter 201T, this method of determining a spatial relation of the user object to the display may be implemented using the other transmitters 203T, 205T and 207T. Thus, the transmitters and receivers of each ultrasonic transducer 201, 203, 205 and 207 may be used in any suitable combination to determine the location of the user object 302. Additionally, transmitters 201T, 203T, 205T and 207T may be activated in a selected pattern. In one embodiment, the relative location of the user object 302 may be determined by triangulation of the distances determined using any or all of the ultrasonic transducers 201, 203, 205 and 207.

In addition to determining a location of the user object 302, the signals transmitted and received by ultrasonic transducers 201, 203, 205 and 207 may be used to determine a user action by the user object 302. A user action may include, for example, a position of the user object 302, a motion of the user object 302 with respect to the device 110, and/or a gesture or movement of the user object 302. The processor 312 may interpret the user action and perform a corresponding action based upon the user action.

Figure 4 depicts a display 400 having an alternative configuration of transducers. The alternative configuration includes six transducers 401, 403, 405, 407, 409 and 411, each transducer having a transmitter and receiver (401T, 401R), (403T, 403R), (405T, 405R), (407T, 407T), (409T, 409R) and (411T, 411T), respectively. In general, increasing the number of transducers can provide for determining the location of the user object 302 at a higher resolution within the three-dimensional space.

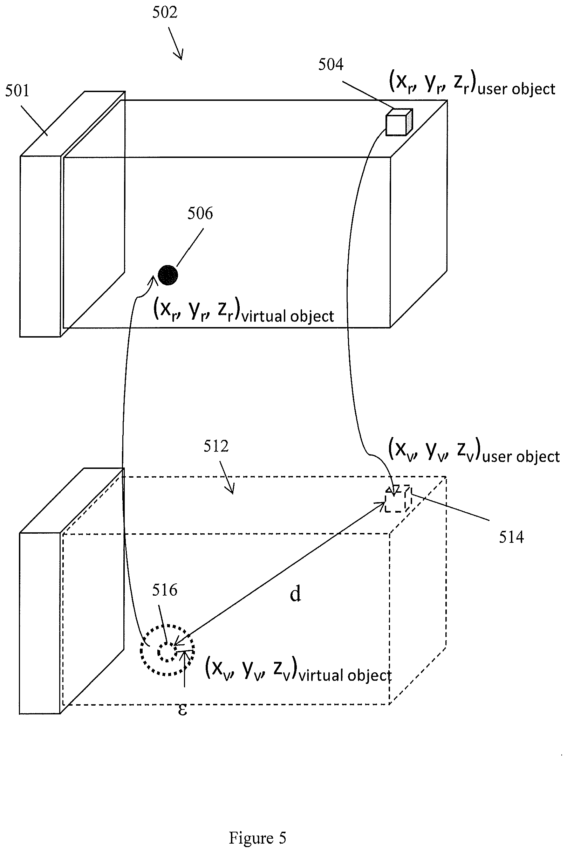

Figure 5 illustrates a method of mapping a user object in a real space to a virtual location within the three-dimensional desktop environment to enable an interaction of the user with the three-dimensional desktop environment. The three-dimensional desktop environment is projected by display 501, which may be coupled to and operates under the control of a processor (such as processor 312 of Figure 3). "Real space" 502 refers to an actual space in front of the display 501 that projects the desktop environment. The size and shape of the desktop environment may be determined by a number and configuration of ultrasonic transducers associated with the display 501. A "virtual space" 512 is a space stored in a memory location. The virtual space 512 may include virtual objects having a corresponding representation in real space. Such corresponding representation may include an image, an icon, an application, a calendar page, etc. The virtual location of such virtual objects may be included in the virtual space.

There generally exists a one-to-one correspondence between the virtual space 512 and the real space 502 so that it is possible to map a position in real space 502 to a corresponding position in virtual space 512 and vice-versa. For example, a virtual object 516 that has position (xᵥ, yᵥ, zᵥ)_{virtual object} in virtual space 512 may be mapped to a position (xᵣ, yᵣ, Zᵣ)_{virtual object} in real space 502 at which a corresponding image 506 is projected. Also, a position of the user object (xᵣ, yᵣ, Zᵣ)_{user object} in real space 502 may be mapped to a corresponding position (xᵥ, yᵥ, zᵥ)_{user object} of a representation 514 of the user object 504 in virtual space 512. As the user moves the user object 504 in the real space 502, transmitted and received signals from the ultrasonic transducers are used by the processor to determine the position (xᵣ, yᵣ, Zᵣ)_{user object} of the user object 504 in real space 502 and map this real position to the corresponding virtual position (xᵥ, yᵥ, zᵥ)_{user object} of its virtual representation 514.

In addition to mapping a virtual object 516 to real space 502 and mapping a user object 504 to virtual space 512, the processor 312 may determine a relative distance d between the location (xᵣ, yᵣ, Zᵣ)_{user object} of the user object 504 in real space and the location (xᵣ, yᵣ, zᵣ)_{virtual object} of the projected image 506 in real space 502. Processor 312 determines distance d using the virtual position (xᵥ, yᵥ, zᵥ)_{user object} of the representation 514 of user object 504 and the virtual position (xᵥ, yᵥ, zᵥ)_{virtual object} of the virtual object 516. When the determined distance d is less than a selected threshold value ε, the processor 312 may determine that the virtual representation 514 substantially coincides with or "touches" the selected virtual object 516. The touching of the virtual representation 514 to the virtual object 516 in virtual space 512 corresponds with the experience of the user seeing the user object 504 as "touching" the projected image 506 of the virtual object in real space 502. When the distance d between the virtual representation 514 and the virtual object 516 is greater than this selected threshold value ε, the processor 312 may determine that the virtual representation 514 is not touching the virtual object 516 and therefore that the user object 504 is not "touching" the projected image 506.

Once the user object 504 is determined to be touching the projected image 506, the user may perform a user action to select the projected image 506 and to thereby select the corresponding virtual object 516. For example, the user may depress a key or a group of keys or a sequence of keys on a keyboard to select the projected image 506. Alternatively, the user may perform an action using a mouse, a touch pad or a touch-sensitive surface of the device, such as a surface of the display 501. Alternatively, if the user object 504 is a wand or stylus or other suitable user object, the user may select a button at the user object 504 that generates a signal to the device to indicate the user's intent to select the projected image 506. Alternatively, the user may perform a gesture or a motion within the real space 502 of the desktop environment that may be interpreted at the processor 312 as the user having selected the projected image 506. In an embodiment in which the user object 504 is part of a user's hand and the user may perform a pinching motion or other suitable motion at the position of the projected image 506 to perform a "grabbing" of the projected image 506. Alternatively, the user action may include maintaining the user object 504 at the substantial position of the projected image 506 for an extended period of time, such as for longer than one second, to select the projected image 506. Various user actions may similarly be taken to deselect a projected image.

Once the user has selected the projected image 506, the user may perform a user action on the projected image 506. In various embodiments, the user may move the projected image 506 from one position in the desktop environment to another position in the desktop environment, rotate the projected image 506, increase a size of the projected image 506, decrease a size of the projected image 506, etc. In addition, the user may activate or open an application or a program by selected the projected image 506.

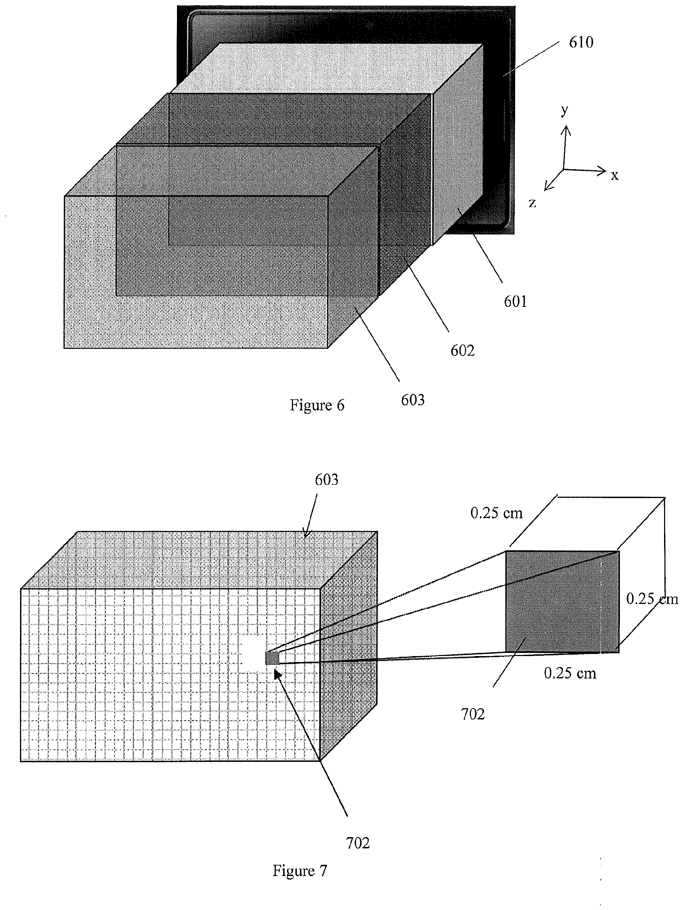

Figure 6 shows an organizational structure of an illustrative three-dimensional desktop environment. The desktop environment is segmented into a plurality of illustrative "power" levels 601, 602 and 603, wherein each level spans a range of distances from the display 610 along the z-axis. The number of power levels and a spatial extent of a selected power level may be a pre-set parameter of the desktop environment such as 7 power levels or 20 power levels. Power levels may be used to organize the placement and/or importance of projected images along a z-axis of the desktop environment. Additionally, a power level may be subdivided into sub-groups or sub-volumes of the power level.

Figure 7 shows an expanded view of illustrative power level 603 of the three-dimensional desktop environment. The illustrative level 603 may include various pixelated volumes or pixel volumes 702. The size of a pixel volume 702 may be selected or pre-programmed at the device according to a resolution capability of the ultrasonic transducers. In the illustrative power level 603, a horizontal extent of pixel volume 702 is about 0.25 centimeters (cm), a vertical extent of pixel volume 702 is about 0.25 cm, and a thickness or depth of pixel volume 702 is about 0.25 cm. Increasing the number of ultrasonic transducers at the display (610, Figure 6) enables smaller pixel volumes 702, thereby increasing the resolution of the power level 700. Each pixel volume 702 may be mapped to a look-up table that includes user access rights. When a user object (504, Figure 5) enters into a selected pixel volume 702, the processor (312, Figure 3) may access the look-up table to determine the user's access rights and may use such access rights when performing an action, such as by enabling or disabling a feature.

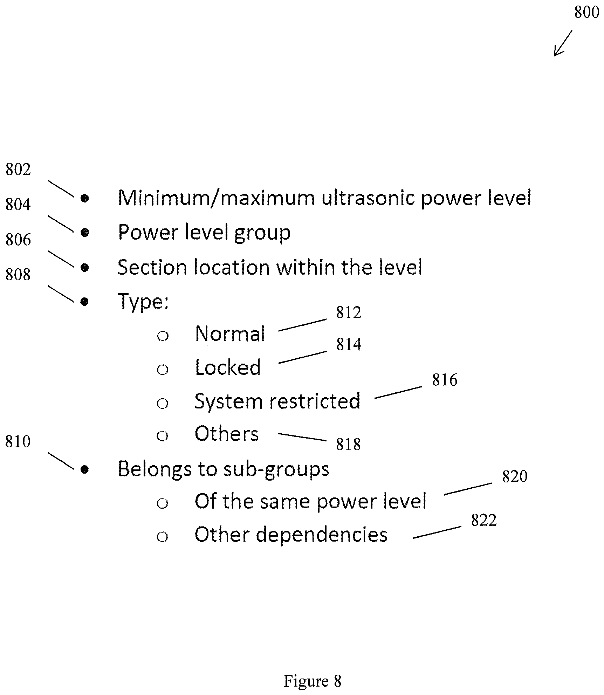

Figure 8 shows an exemplary entry 800 in a look-up table for a selected pixel volume of the three-dimensional desktop environment. The look-up table entry 800 may include various fields. Field 802 indicates minimum and maximum ultrasonic power level that indicates the spatial boundaries for the pixel volume 702. Another field 804 indicates a power level to which the pixel volume belongs or is assigned. Field 806 indicates a section within the power level, i.e., horizontal and/or vertical position of the pixel volume to which the pixel volume 702 may belong.

Field 808 indicates a user rights or user access with respect to the pixel volume. User access rights may include, for example and without limitation, "Normal" 812 "Locked" 814 "System Restricted" 816 and "Others" 818. A Normal 812 access right may mean that the user is free to interact with the pixel volume. A Locked 814 access right may exclude the user from interacting with the pixel volume. For example, a power level may be locked for a given user or locked for a given application, etc. A System Restricted 816 access right may mean that the pixel volume is only for displaying system objects that are not to be tampered with by the user. An "Others" 818 access right may be a user-defined access right or application-specific access right, for example.

Field 810 indicates to which sub-groups the pixel volume may belong. A sub-group 820 may include pixel volumes within a same power level. Alternatively, a sub-group 822 may be a system-defined or user-defined group or category. Images or icons within the three-dimensional desktop environment may be grouped into the sub-group according to an affiliation with the category. For example, a sub-group may include Microsoft Office applications and their icons for Word, Excel, Powerpoint, etc. Examples of user-defined sub-groups may include icons grouped according to user's hobbies, clubs, career advancement documents, financial documents, pictures, etc. Icons in a same group may be flagged with a selected marker, such as a virtual tag, etc.

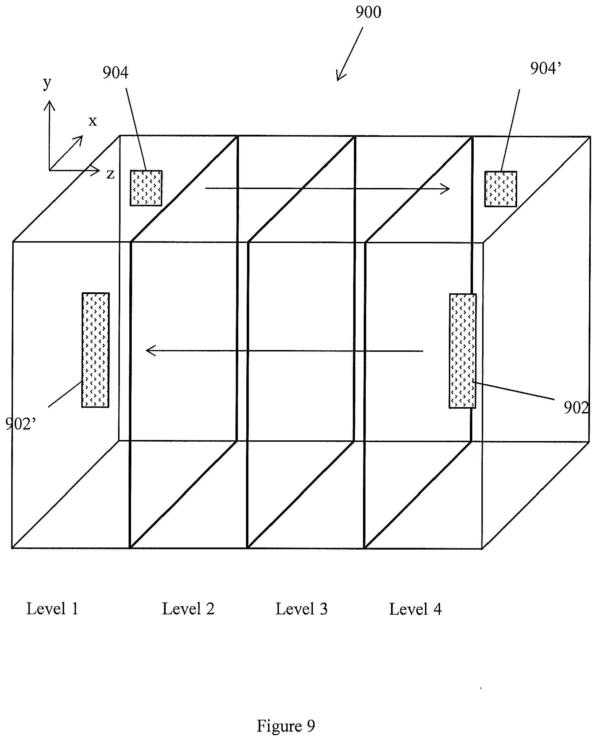

Figure 9 illustrates the exemplary motion of a virtual object within the three-dimensional desktop environment. As an element of the virtual space, a virtual object may reside within a selected power level of the virtual space, labeled as "Level 1," "Level 2," "Level 3" and "Level 4." For example, the group of icons 902 resides within power level 4 relatively further away from the display surface, and icon 904 resides within power level 1 relatively closer to the display surface. Through the method disclosed herein, a user may move icon group 902 from its location in Level 4 to a new location 902' in Level 1. Similarly, the user may move icon 904 from its location in Level 1 to a new location 904' in Level 4. For illustrative purposes, Level 2 may be a restricted level to the user. Thus, the user may be unable to move either of the icon groups 902 and icon 904 to reside at a location within Level 2. Although not explicitly illustrated in Figure 9, it is to be understood that a virtual object may be moved horizontally (x-direction) and vertically (y-direction) as well as in the z-direction (i.e., towards and away from a display surface)

Therefore, in accordance with one aspect of the disclosure, a method of performing an action with a processor includes: generating, using the processor, a three-dimensional desktop environment and projecting the three-diensional desktop environment into a real space; propagating an ultrasonic pulse into the real space; receiving a reflection of the ultrasonic pulse from a user object located within the real space; determining a user action of the user object using the ultrasonic pulse and the reflected ultrasonic pulse; and performing the action with the processor based on the determined user action.

In accordance with another aspect of the disclosure, an electronic device includes: a display configured to project a three-dimensional desktop environment into a real space; at least one ultrasonic transducer configured to propagate an ultrasonic pulse into the real space and receive a reflection of the ultrasonic pulse from a user object in the real space; and a processor configured to: determine a user action of a user object from the reflection of the ultrasonic pulse, and perform an action based on the determined user action of the user object.

In accordance with yet another aspect of the disclosure, an interface for providing a user interaction with an electronic device includes: a display configured to project a three-dimensional desktop environment into a real space; at least one ultrasonic transducer configured to propagate an ultrasonic pulse into the real space and receive a reflection of the ultrasonic pulse from a user object in the real space; and a processor configured to: determine a user action of a user object from the reflection of the ultrasonic pulse, and perform an action based on the determined user action of the user object.

It should be understood that although illustrative implementations of one or more embodiments of the present disclosure are provided herein, the disclosed systems and/or methods may be implemented using any number of techniques, whether currently known or in existence. The disclosure should in no way be limited to the illustrative implementations, drawings, and techniques illustrated herein, including the exemplary designs and implementations illustrated and described herein, but may be modified within the scope of the appended claims along with their full scope.

While several embodiments have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein. For example, various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope of the present disclosure.

## Claims

1. A method of performing an action with a processor (312), comprising:
generating, using the processor (312), a three-dimensional desktop environment (100) and projecting the three-dimensional desktop environment (100) into a real space (502);
projecting an image (506) within the three-dimensional desktop environment (100);
propagating an ultrasonic pulse (305) into the real space (502);
receiving a reflection (307a-d) of the ultrasonic pulse (305) from a user object (504) located within the real space (502);
determining a user action of the user object (504) with respect to the projected image (506) using the ultrasonic pulse (305) and the reflected ultrasonic pulse (307a-d); and
performing the action with the processor (312) based on the determined user action of the user object (504) with respect to the projected image (506).

2. The method of claim 1, wherein determining the user action further comprises determining at least one of: (i) a perpendicular distance of the user object (504) from a display (501); (ii) a position of the user object (504) along a horizontal axis of the display (501); (iii) a position of the user object (504) along a vertical axis of the display (501); (iv) a movement of the user object (504) within the three-dimensional desktop environment (100); and (v) a gesture made by the user object (504).

3. The method of claim 1, further comprising using at least one ultrasonic transducer (201, 203, 205, 207) to determine the user action of the user object (504) and determining a time difference between propagating the ultrasonic pulse (305) into the real space (504) and receiving the reflection (307a-d) of the ultrasonic pulse (305) from the user object (504).

4. The method of claim 1, further comprising defining a power layer (601, 602, 603) within the three-dimensional desktop environment (100), the power layer (601, 602, 603) having one or more pixel volumes (702), and assigning a user right to the one or more pixel volumes (702), wherein performing the action at the processor unit (312) further comprises accessing the user right for the one or more pixel volumes (702).

5. The method of claim 1, wherein performing the action further comprises at least one of: moving a projected image (506) within the three-dimensional desktop environment (100); enlarging the projected image (506); diminishing the projected image (506); rotating the projected image (506); selecting an action corresponding to the projected image (506); opening a computer application associated with a selection of the projected image (506).

6. The method of claim 1, wherein the projected image (506) includes a plurality of projected images (902) that are grouped according to a category, the method further comprising performing the action with respect to the group of projected images (902).

7. An electronic device (102), comprising:
a display (501) configured to project a three-dimensional desktop environment (100) into a real space (502) and to project an image (506) within the three-dimensional desktop environment (100);
at least one ultrasonic transducer (201, 203, 205, 207) configured to propagate an ultrasonic pulse (305) into the real space (502) and receive a reflection (307a-d) of the ultrasonic pulse (305) from a user object (504) in the real space (502); and
a processor (312) configured to:
determine a user action of a user object (504) with respect to the projected image (506) from the reflection (307a-d) of the ultrasonic pulse (305), and
perform an action based on the determined user action of the user object (504) with respect to the projected image (506).

8. The device of claim 7 wherein the at least one ultrasonic transducer (201, 203, 205, 207) further comprises a transmitter (201R), a first receiver (201T) and a second receiver (203T), the processor (312) further configured to determine the user action by determining a time difference between propagating the ultrasonic pulse (305) from the transmitter (201T) and receiving a reflection (307a, 307b) of the generated ultrasonic pulse (305) from the user object (504) at at least one of the first receiver (201R) and the second receiver (203R).

9. The device of claim 7, wherein the processor (312) is further configured to:
define a power layer (601, 602, 603) within the three-dimensional desktop environment (100) having one or more pixel volumes (702);
assign a user right to the one or more pixel volumes (702); and
access the user right for the one or more pixel volumes (702) to perform the action.

10. The device of claim 7, wherein performing the action further comprises at least one of: moving a projected image (506) within the three-dimensional desktop environment (100); enlarging the projected image (506); diminishing the projected image (506); rotating the projected image (506); selecting an action corresponding to the projected image (506); opening a computer application associated with a selection of the projected image (506).

## Patentansprüche

1. Verfahren zum Ausführen einer Aktion mit einem Prozessor (312), wobei das Verfahren die folgenden Schritte umfasst:
Erzeugen einer dreidimensionalen Desktopumgebung (100) unter Verwendung des Prozessors (312) und Projizieren der dreidimensionalen Desktopumgebung (100) in einen realen Raum (502);
Projizieren eines Bildes (506) innerhalb der dreidimensionalen Desktop-Umgebung (100);
Ausbreiten eines Ultraschallimpulses (305) in den realen Raum (502);
Empfangen einer Reflexion (307a-d) des Ultraschallimpulses (305) von einem Benutzerobjekt (504), das sich innerhalb des realen Raums (502) befindet;
Bestimmen einer Benutzeraktion des Benutzerobjekts (504) in Bezug auf das projizierte Bild (506) unter Verwendung des Ultraschallimpulses (305) und des reflektierten Ultraschallimpulses (307a-d); und
Durchführen der Aktion mit dem Prozessor (312) basierend auf der bestimmten Benutzeraktion des Benutzerobjekts (504) in Bezug auf das projizierte Bild (506) .

2. Das Verfahren gemäß Anspruch 1, wobei das Bestimmen der Benutzeraktion ferner das Bestimmen von mindestens einer der folgenden Komponenten umfasst: (i) einen senkrechten Abstand des Benutzerobjekts (504) von einem Display (501); (ii) eine Position des Benutzerobjekts (504) entlang einer horizontalen Achse des Displays (501); (iii) eine Position des Benutzerobjekts (504) entlang einer vertikalen Achse des Displays (501); (iv) eine Bewegung des Benutzerobjekts (504) innerhalb der dreidimensionalen Desktopumgebung (100); und (v) eine durch das Benutzerobjekt (504) ausgeführte Geste.

3. Das Verfahren gemäß Anspruch 1, ferner umfassend die Verwendung mindestens eines Ultraschallwandlers (201, 203, 205, 207) zum Bestimmen der Benutzeraktion des Benutzerobjekts (504) und zum Bestimmen einer Zeitdifferenz zwischen dem Ausbreiten des Ultraschallimpulses (305) in den realen Raum (504) und dem Empfangen der Reflexion (307a-d) des Ultraschallimpulses (305) von dem Benutzerobjekt (504).

4. Das Verfahren gemäß Anspruch 1, ferner umfassend das Definieren einer Versorgungslage (601, 602, 603) innerhalb der dreidimensionalen Desktopumgebung (100), wobei die Versorgungslage (601, 602, 603) ein oder mehrere Pixelvolumina (702) aufweist, und das Zuweisen eines Benutzerrechts zu dem einen oder den mehreren Pixelvolumina (702), wobei das Ausführen der Aktion an der Prozessoreinheit (312) ferner das Zugreifen auf das Benutzerrecht für das eine oder die mehreren Pixelvolumina (702) umfasst.

5. Das Verfahren gemäß Anspruch 1, wobei das Ausführen der Aktion ferner mindestens eine der folgenden Schritte umfasst: Bewegen eines projizierten Bildes (506) innerhalb der dreidimensionalen Desktopumgebung (100); Vergrößern des projizierten Bildes (506); Verkleinern des projizierten Bildes (506); Drehen des projizierten Bildes (506); Auswählen einer Aktion entsprechend dem projizierten Bild (506); Öffnen einer Computeranwendung, die einer Auswahl des projizierten Bildes (506) zugeordnet ist.

6. Das Verfahren gemäß Anspruch 1, wobei das projizierte Bild (506) eine Vielzahl von projizierten Bildern (902) beinhaltet, die gemäß einer Kategorie gruppiert sind, wobei das Verfahren ferner das Ausführen der Aktion in Bezug auf die Gruppe der projizierten Bilder (902) umfasst.

7. Eine elektronische Vorrichtung (102), umfassend:
ein Display (501), das dazu konfiguriert ist, eine dreidimensionale Desktopumgebung (100) in einen realen Raum (502) zu projizieren und ein Bild (506) innerhalb der dreidimensionalen Desktopumgebung (100) zu projizieren;
mindestens einen Ultraschallwandler (201, 203, 205, 207), der dazu konfiguriert ist, einen Ultraschallimpuls (305) in den realen Raum (502) zu übertragen und eine Reflexion (307a-d) des Ultraschallimpulses (305) von einem Benutzerobjekt (504) in dem realen Raum (502) zu empfangen; und
einen Prozessor (312), der dazu konfiguriert ist:
eine Benutzeraktion eines Benutzerobjekts (504) in Bezug auf das projizierte Bild (506) aus der Reflexion (307a-d) des Ultraschallimpulses (305) zu bestimmen und
eine Aktion basierend auf der bestimmten Benutzeraktion des Benutzerobjekts (504) in Bezug auf das projizierte Bild (506) durchzuführen.

8. Die Vorrichtung gemäß Anspruch 7, wobei der mindestens eine Ultraschallwandler (201, 203, 205, 207) ferner einen Sender (201R), einen ersten Empfänger (201T) und einen zweiten Empfänger (203T) umfasst, der Prozessor (312) ferner dazu konfiguriert ist, die Benutzeraktion durch Bestimmen einer Zeitdifferenz zwischen dem Ausbreiten des Ultraschallimpulses (305) von dem Sender (201T) und dem Empfangen einer Reflexion (307a, 307b) des erzeugten Ultraschallimpulses (305) von dem Benutzerobjekt (504) an mindestens einem von dem ersten Empfänger (201R) und dem zweiten Empfänger (203R) zu bestimmen.

9. Die Vorrichtung gemäß Anspruch 7, wobei der Prozessor (312) ferner dazu konfiguriert ist:
eine Versorgungslage (601, 602, 603) innerhalb der dreidimensionalen Desktopumgebung (100) mit einem oder mehreren Pixelvolumina (702) zu definieren;
ein Benutzerrecht dem einen oder mehreren Pixelvolumina (702) zuzuweisen; und
auf das Benutzerrecht für das eine oder die mehreren Pixelvolumina (702) zuzugreifen, um die Aktion auszuführen.

10. Die Vorrichtung gemäß Anspruch 7, wobei das Ausführen der Aktion ferner mindestens einen der folgenden Schritte umfasst: Bewegen eines projizierten Bildes (506) innerhalb der dreidimensionalen Desktopumgebung (100); Vergrößern des projizierten Bildes (506); Verkleinern des projizierten Bildes (506); Drehen des projizierten Bildes (506); Auswählen einer dem projizierten Bild (506) entsprechenden Aktion; Öffnen einer Computeranwendung, die einer Auswahl des projizierten Bildes (506) zugeordnet ist.

## Revendications

1. Procédé d'exécution d'une action avec un processeur (312), comprenant les étapes consistant à :
générer, en utilisant le processeur (312), un environnement de bureau tridimensionnel (100) et projeter l'environnement de bureau tridimensionnel (100) dans un espace réel (502) ;
projeter une image (506) dans l'environnement de bureau tridimensionnel (100) ;
propager une impulsion ultrasonore (305) dans l'espace réel (502) ;
recevoir une réflexion (307a-d) de l'impulsion ultrasonore (305) à partir d'un objet d'utilisateur (504) situé dans l'espace réel (502) ;
déterminer une action d'utilisateur de l'objet d'utilisateur (504) par rapport à l'image projetée (506) en utilisant l'impulsion ultrasonore (305) et l'impulsion ultrasonore réfléchie (307a-d) ; et
exécuter l'action avec le processeur (312) sur la base de l'action d'utilisateur déterminée de l'objet d'utilisateur (504) par rapport à l'image projetée (506).

2. Procédé de la revendication 1, dans lequel la détermination de l'action d'utilisateur comprend en outre la détermination d'au moins l'un parmi : (i) une distance perpendiculaire de l'objet d'utilisateur (504) à partir d'un dispositif d'affichage (501) ; (ii) une position de l'objet d'utilisateur (504) le long d'un axe horizontal du dispositif d'affichage (501) ; (iii) une position de l'objet d'utilisateur (504) le long d'un axe vertical du dispositif d'affichage (501) ; (iv) un mouvement de l'objet d'utilisateur (504) dans l'environnement de bureau tridimensionnel (100) ; et (v) un geste effectué par l'objet d'utilisateur (504).

3. Procédé de la revendication 1, comprenant en outre les étapes consistant à utiliser au moins un transducteur ultrasonore (201, 203, 205, 207) pour déterminer l'action d'utilisateur de l'objet d'utilisateur (504) et déterminer une différence de temps entre la propagation de l'impulsion ultrasonore (305) dans l'espace réel (504) et la réception de la réflexion (307a-d) de l'impulsion ultrasonore (305) à partir de l'objet d'utilisateur (504).

4. Procédé de la revendication 1, comprenant en outre les étapes consistant à définir une couche d'alimentation (601, 602, 603) dans l'environnement de bureau tridimensionnel (100), la couche d'alimentation (601, 602, 603) ayant un ou plusieurs volumes de pixels (702), et attribuer un droit d'utilisateur aux un ou plusieurs volumes de pixels (702), où l'exécution de l'action au niveau de l'unité de processeur (312) comprend en outre l'accès au droit d'utilisateur pour les un ou plusieurs volumes de pixels (702).

5. Procédé de la revendication 1, dans lequel l'exécution de l'action comprend en outre au moins l'une des étapes suivantes : le déplacement d'une image projetée (506) dans l'environnement de bureau tridimensionnel (100) ; l'agrandissement de l'image projetée (506) ; la réduction de l'image projetée (506) ; la rotation de l'image projetée (506) ; la sélection d'une action correspondant à l'image projetée (506) ; l'ouverture d'une application informatique associée à une sélection de l'image projetée (506).

6. Procédé de la revendication 1, dans lequel l'image projetée (506) comporte une pluralité d'images projetées (902) qui sont regroupées selon une catégorie, le procédé comprenant en outre l'étape consistant à exécuter l'action par rapport au groupe d'images projetées (902).

7. Dispositif électronique (102), comprenant :
un dispositif d'affichage (501) configuré pour projeter un environnement de bureau tridimensionnel (100) dans un espace réel (502) et pour projeter une image (506) dans l'environnement de bureau tridimensionnel (100) ;
au moins un transducteur ultrasonore (201, 203, 205, 207) configuré pour propager une impulsion ultrasonore (305) dans l'espace réel (502) et recevoir une réflexion (307a-d) de l'impulsion ultrasonore (305) à partir d'un objet d'utilisateur (504) dans l'espace réel (502) ; et
un processeur (312) configuré pour :
déterminer une action d'utilisateur d'un objet d'utilisateur (504) par rapport à l'image projetée (506) à partir de la réflexion (307a-d) de l'impulsion ultrasonore (305), et
exécuter une action sur la base de l'action d'utilisateur déterminée de l'objet d'utilisateur (504) par rapport à l'image projetée (506).

8. Dispositif de la revendication 7, dans lequel l'au moins un transducteur ultrasonore (201, 203, 205, 207) comprend en outre un émetteur (201R), un premier récepteur (201T) et un deuxième récepteur (203T), le processeur (312) étant en outre configuré pour déterminer l'action d'utilisateur en déterminant une différence de temps entre la propagation de l'impulsion ultrasonore (305) provenant de l'émetteur (201T) et la réception d'une réflexion (307a, 307b) de l'impulsion ultrasonore générée (305) à partir de l'objet d'utilisateur (504) au niveau d'au moins l'un du premier récepteur (201R) et du deuxième récepteur (203R).

9. Dispositif de la revendication 7, dans lequel le processeur (312) est en outre configuré pour :
définir une couche d'alimentation (601, 602, 603) dans l'environnement de bureau tridimensionnel (100) ayant un ou plusieurs volumes de pixels (702) ;
attribuer un droit d'utilisateur aux un ou plusieurs volumes de pixels (702) ; et
accéder au droit d'utilisateur pour les un ou plusieurs volumes de pixels (702) pour exécuter l'action.

10. Dispositif de la revendication 7, dans lequel l'exécution de l'action comprend en outre au moins l'une des étapes suivantes : le déplacement d'une image projetée (506) dans l'environnement de bureau tridimensionnel (100) ; l'agrandissement de l'image projetée (506) ; la réduction de l'image projetée (506) ; la rotation de l'image projetée (506) ; la sélection d'une action correspondant à l'image projetée (506) ; l'ouverture d'une application informatique associée à une sélection de l'image projetée (506).
